# EUROPEAN PATENT APPLICATION

(11) **EP 4 651 608 A1**
(43) Date of publication of application: **19.11.2025**
(21) Application number: 24744165.2
(22) Date of filing: 11.01.2024
(51) Int. Cl.: H04W 72/53

(54) **COMMUNICATION METHOD AND APPARATUS**

(30) Priority: 20.01.2023 CN 202310105614
(71) Applicant: Huawei Technologies Co., Ltd., Shenzhen, Guangdong 518129 (CN)
(72) Inventor: ZHANG, Yangyang, Shenzhen, Guangdong 518129 (CN); YU, Zheng, Shenzhen, Guangdong 518129 (CN); QIANG, Li, Shenzhen, Guangdong 518129 (CN)
(74) Representative: Epping - Hermann - Fischer
(86) International application number: PCT/CN2024/071863
(87) International publication number: WO 2024/152989

(57) **Abstract**

A communication method and apparatus are provided, which relate to the field of communication technologies, so that when an access network device configures an uplink resource for a terminal device, a waste of uplink resources can be reduced, and a network capacity can be improved. The method includes: receiving first indication information from the access network device, and sending second indication information to the access network device. The first indication information indicates a transmission resource configured by the access network device for the terminal device, and the transmission resource includes a plurality of resources. The second indication information indicates a first resource group, and the first resource group includes one or more resource groups not used by the terminal device. Each resource group includes a plurality of resources, and the first resource group is a part or all of the transmission resource.

## Description

This application claims priority to Chinese Patent Application No. 202310105614.5, filed with the China National Intellectual Property Administration on January 20, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a communication system, an access network device may configure an uplink resource for a terminal device in an uplink configured grant (configured grant, CG) manner, and the terminal device may implement uplink data transmission based on the configured uplink resource.

The uplink CG manner means that in an uplink transmission process, the access network device allocates the uplink resource to the terminal device once by using radio resource control layer (radio resource control, RRC) signaling or a physical downlink control channel (physical downlink control channel, PDCCH), and then the terminal device may perform uplink transmission by periodically and repeatedly using a same time-frequency resource, to implement periodic uplink service transmission.

However, a size of the uplink resource configured by the access network device for the terminal device is fixed, and cannot flexibly match service data whose size is dynamically variable on the terminal device side. When a large quantity of uplink resources are configured by the access network device for the terminal device, a waste of uplink resources is caused, and a network capacity is affected.

### SUMMARY

Embodiments of this application provide a communication method and apparatus, so that when an access network device configures an uplink resource for a terminal device, a waste of uplink resources can be reduced, and a network capacity can be improved.

According to a first aspect, an embodiment of this application provides a communication method. The method may be performed by a terminal device, or may be performed by a chip used in the terminal device. The following uses an example in which the method is performed by the terminal device for description. The method may include: receiving first indication information from an access network device, and sending second indication information to the access network device. The first indication information indicates a transmission resource configured by the access network device for the terminal device, and the transmission resource includes a plurality of resources. The second indication information indicates a first resource group, and the first resource group includes one or more resource groups not used by the terminal device. Each resource group includes a plurality of resources, and the first resource group is a part or all of the transmission resource.

Based on the first aspect, the terminal device indicates, by using the second indication information, a resource group not used by the terminal device in one CG period. In this way, the access network device may allocate the resource group currently not used by the terminal device to another terminal device for use, so that resources can be saved, and a network capacity can be improved.

In a possible design, the second indication information indicates a bitmap, and each bit in the bitmap indicates whether a resource group associated with the bit is used.

Based on the possible design, the bitmap may indicate consecutive resource groups not used by the terminal device, or may indicate discrete resource groups not used by the terminal device, so that bits can be saved.

In a possible design, the second indication information includes length information of the first resource group, and the length information is used to determine the first resource group based on a preset end position or a preset start position of the first resource group. Alternatively, the second indication information includes start position information of the first resource group, and the start position information is used to determine the first resource group based on a preset end position of the first resource group. Alternatively, the second indication information includes end position information of the first resource group, and the end position information is used to determine the first resource group based on a preset start position of the first resource group.

Based on the possible design, the length information, the start position information, and/or the end position information of the first resource group may be carried in the second indication information, to indicate consecutive resource groups not used by the terminal device, and a plurality of feasible solutions are provided for the second indication information.

In a possible design, the second indication information includes length information of a second resource group, and the length information is used to determine the second resource group based on a preset end position or a preset start position of the second resource group. Alternatively, the second indication information includes start position information of a second resource group, and the start position information is used to determine the second resource group based on preset end position information of the second resource group. Alternatively, the second indication information includes end position information of a second resource group, and the end position information is used to determine the second resource group based on a preset start position of the second resource group. The second resource group is one or more resource groups occupiable by the terminal device, and the second resource group is a resource that is in the transmission resource and that is other than the first resource group.

Based on the possible design, the length information, the start position information, and/or the end position information of the second resource group may alternatively be carried in the second indication information, to indicate a resource group used by the terminal device and implicitly indicate consecutive resource groups not used by the terminal device, and a plurality of feasible solutions are provided for the second indication information.

In a possible design, the resource groups included in the first resource group are consecutive resource groups. Alternatively, the resource groups included in the first resource group are discrete resource groups.

Based on the possible design, the terminal device may transmit service data by using consecutive resource groups, or may transmit service data by using discrete resource groups. Correspondingly, the resource groups not used by the terminal device may be consecutive resource groups, or may be discrete resource groups.

In a possible design, the resource is a frequency domain resource associated with a CG physical uplink shared channel transmission occasion CG PUSCH transmission occasion included in one configured grant CG period. Alternatively, the resource is a time domain resource associated with a CG PUSCH transmission occasion included in one CG period.

In a possible design, the resource is one resource element RE or one resource block RB in a frequency domain resource associated with a CG PUSCH transmission occasion included in one CG period. Alternatively, the resource is one slot, one mini-slot, or one transport block TB in a time domain resource associated with a CG PUSCH transmission occasion included in one CG period.

Based on the foregoing two possible designs, a plurality of possible designs are provided for a definition of the resource.

In a possible design, a maximum quantity of physical uplink shared channel transmission occasions PUSCH transmission occasions included in one configured grant CG period is greater than 40.

In a possible design, a quantity of PUSCH transmission occasions included in one CG period is 80.

Based on the foregoing two possible designs, with reference to NR-U and considering that a packet quantity in XR may be large, the maximum quantity of PUSCH transmission occasions included in one CG period may be set to be greater than 40 (for example, up to 80), to ensure normal transmission of an XR service.

In a possible design, third indication information is sent to the access network device, where the third indication information indicates a decoding mode of the second indication information.

In a possible design, before the second indication information is sent to the access network device, the method further includes: receiving fourth indication information from the access network device, where the fourth indication information indicates an expected decoding mode of the second indication information; and determining the second indication information based on the fourth indication information.

Based on the foregoing two possible designs, the terminal device or the access network device may select, based on different bit quantity requirements or other requirements such as a complexity requirement and a resource configuration flexibility requirement, appropriate second indication information indicating a resource group (or a resource) not used by the terminal device, so that indication is more flexible.

In a possible design, fifth indication information is sent to the access network device, where the fifth indication information indicates one or more configured grant CG periods associated with the second indication information.

In a possible design, the fifth indication information includes an index of the one or more CG periods. Alternatively, the fifth indication information includes a start position and a length of the one or more CG periods.

Based on the foregoing two possible designs, a range of a CG period to which the second indication information is applicable may be made clear. When a service size remains unchanged for a long time, the second indication information may be sent once, and a plurality of CG periods to which the second indication information is applicable may be indicated by the fifth indication information, so that signaling overheads can be reduced.

According to a second aspect, an embodiment of this application provides a communication method. The method may be performed by an access network device, or may be performed by a chip used in the access network device. The following uses an example in which the method is performed by the access network device for description. The method may include: sending first indication information to a terminal device, and receiving second indication information from the terminal device. The first indication information indicates a transmission resource configured by the access network device for the terminal device, and the transmission resource includes a plurality of resources. The second indication information indicates a first resource group, and the first resource group includes one or more resource groups not used by the terminal device. The resource group includes a plurality of resources, and the first resource group is a part or all of the transmission resource.

Based on the second aspect, the terminal device indicates, by using the second indication information, a resource group not used by the terminal device in one CG period. In this way, the access network device may allocate the resource group currently not used by the terminal device to another terminal device for use, so that resources can be saved, and a network capacity can be improved.

In a possible design, the second indication information indicates a bitmap, and each bit in the bitmap indicates whether a resource group associated with the bit is used.

Based on the possible design, the bitmap may indicate consecutive resource groups not used by the terminal device, or may indicate discrete resource groups not used by the terminal device, so that bits can be saved.

In a possible design, the second indication information includes length information of the first resource group, and the length information is used to determine the first resource group based on a preset end position or a preset start position of the first resource group. Alternatively, the second indication information includes start position information of the first resource group, and the start position information is used to determine the first resource group based on a preset end position of the first resource group. Alternatively, the second indication information includes end position information of the first resource group, and the end position information is used to determine the first resource group based on a preset start position of the first resource group.

Based on the possible design, the length information, the start position information, and/or the end position information of the first resource group may be carried in the second indication information, to indicate consecutive resource groups not used by the terminal device, and a plurality of feasible solutions are provided for the second indication information.

In a possible design, the second indication information includes length information of a second resource group, and the length information is used to determine the second resource group based on a preset end position or a preset start position of the second resource group. Alternatively, the second indication information includes start position information of a second resource group, and the start position information is used to determine the second resource group based on preset end position information of the second resource group. Alternatively, the second indication information includes end position information of a second resource group, and the end position information is used to determine the second resource group based on a preset start position of the second resource group. The second resource group is one or more resource groups occupiable by the terminal device, and the second resource group is a resource that is in the transmission resource and that is other than the first resource group.

Based on the possible design, the length information, the start position information, and/or the end position information of the second resource group may alternatively be carried in the second indication information, to indicate a resource group used by the terminal device and implicitly indicate consecutive resource groups not used by the terminal device, and a plurality of feasible solutions are provided for the second indication information.

In a possible design, the resource groups included in the first resource group are consecutive resource groups. Alternatively, the resource groups included in the first resource group are discrete resource groups.

Based on the possible design, the terminal device may transmit service data by using consecutive resource groups, or may transmit service data by using discrete resource groups. Correspondingly, the resource groups not used by the terminal device may be consecutive resource groups, or may be discrete resource groups.

In a possible design, the resource is a frequency domain resource associated with a CG physical uplink shared channel transmission occasion CG PUSCH transmission occasion included in one configured grant CG period. Alternatively, the resource is a time domain resource associated with a CG PUSCH transmission occasion included in one CG period.

In a possible design, the resource is one resource element RE or one resource block RB in a frequency domain resource associated with a CG PUSCH transmission occasion included in one CG period. Alternatively, the resource is one slot, one mini-slot, or one transport block TB in a time domain resource associated with a CG PUSCH transmission occasion included in one CG period.

Based on the foregoing two possible designs, a plurality of possible designs are provided for a definition of the resource.

In a possible design, a maximum quantity of physical uplink shared channel transmission occasions PUSCH occasions included in one configured grant CG period is greater than 40.

In a possible design, a quantity of PUSCH transmission occasions included in one CG period is 80.

Based on the foregoing two possible designs, with reference to NR-U and considering that a packet quantity in XR may be large, the maximum quantity of PUSCH transmission occasions included in one CG period may be set to be greater than 40 (for example, up to 80), to ensure normal transmission of an XR service.

In a possible design, third indication information is received from the terminal device, where the third indication information indicates a decoding mode of the second indication information.

In a possible design, before the second indication information is received from the terminal device, the method further includes: sending fourth indication information to the terminal device, where the fourth indication information indicates an expected decoding mode of the second indication information.

Based on the foregoing two possible designs, the terminal device or the access network device may select, based on different bit quantity requirements or other requirements such as a complexity requirement and a resource configuration flexibility requirement, appropriate second indication information indicating a resource group (or a resource) not used by the terminal device, so that indication is more flexible.

In a possible design, fifth indication information is received from the terminal device, where the fifth indication information indicates one or more configured grant CG periods associated with the second indication information.

In a possible design, the fifth indication information includes an index of the one or more CG periods. Alternatively, the fifth indication information includes a start position and a length of the one or more CG periods.

Based on the foregoing two possible designs, a range of a CG period to which the second indication information is applicable may be made clear. When a service size remains unchanged for a long time, the second indication information may be sent once, and a plurality of CG periods to which the second indication information is applicable may be indicated by the fifth indication information, so that signaling overheads can be reduced.

According to a third aspect, an embodiment of this application provides a communication method. The method may be performed by a terminal device, or may be performed by a chip used in the terminal device. The following uses an example in which the method is performed by the terminal device for description. The method may include: receiving first indication information from an access network device, and sending second indication information to the access network device. The first indication information indicates a transmission resource configured by the access network device for the terminal device, and the transmission resource includes a plurality of resources. The second indication information indicates a bitmap, each bit in the bitmap indicates whether a resource group associated with the bit is used by the terminal device, and the resource group includes one or more resources in the transmission resource.

Based on the third aspect, the terminal device indicates, by using the second indication information, a resource group not used by the terminal device in one CG period. In this way, the access network device may allocate the resource group currently not used by the terminal device to another terminal device for use, so that resources can be saved, and a network capacity can be improved. In a possible design, the resource is a frequency domain resource associated with a CG physical uplink shared channel transmission occasion CG PUSCH transmission occasion included in one configured grant CG period. Alternatively, the resource is a time domain resource associated with a CG PUSCH transmission occasion included in one CG period.

In a possible design, the resource is one resource element RE or one resource block RB in a frequency domain resource associated with a CG PUSCH transmission occasion included in one CG period. Alternatively, the resource is one slot, one mini-slot, or one transport block TB in a time domain resource associated with a CG PUSCH transmission occasion included in one CG period.

Based on the foregoing two possible designs, a plurality of possible designs are provided for a definition of the resource.

In a possible design, a maximum quantity of physical uplink shared channel transmission occasions PUSCH transmission occasions included in one configured grant CG period is greater than 40.

In a possible design, a quantity of PUSCH transmission occasions included in one CG period is 80.

Based on the foregoing two possible designs, with reference to NR-U and considering that a packet quantity in XR may be large, the maximum quantity of PUSCH transmission occasions included in one CG period may be set to be greater than 40 (for example, up to 80), to ensure normal transmission of an XR service.

In a possible design, third indication information is sent to the access network device, where the third indication information indicates a decoding mode of the second indication information.

In a possible design, before the second indication information is sent to the access network device, the method further includes: receiving fourth indication information from the access network device, where the fourth indication information indicates an expected decoding mode of the second indication information; and determining the second indication information based on the fourth indication information.

Based on the foregoing two possible designs, the terminal device or the access network device may select, based on different bit quantity requirements or other requirements such as a complexity requirement and a resource configuration flexibility requirement, appropriate second indication information indicating a resource group (or a resource) not used by the terminal device, so that indication is more flexible.

In a possible design, fifth indication information is sent to the access network device, where the fifth indication information indicates one or more configured grant CG periods associated with the second indication information.

In a possible design, the fifth indication information includes an index of the one or more CG periods. Alternatively, the fifth indication information includes a start position and a length of the one or more CG periods.

Based on the foregoing two possible designs, a range of a CG period to which the second indication information is applicable may be made clear. When a service size remains unchanged for a long time, the second indication information may be sent once, and a plurality of CG periods to which the second indication information is applicable may be indicated by the fifth indication information, so that signaling overheads can be reduced.

According to a fourth aspect, an embodiment of this application provides a communication method. The method may be performed by an access network device, or may be performed by a chip used in the access network device. The following uses an example in which the method is performed by the access network device for description. The method may include: sending first indication information to a terminal device, and receiving second indication information from the terminal device. The first indication information indicates a transmission resource configured by the access network device for the terminal device, and the transmission resource includes a plurality of resources. The second indication information indicates a bitmap, each bit in the bitmap indicates whether a resource group associated with the bit is used by the terminal device, and the resource group includes one or more resources in the transmission resource.

Based on the fourth aspect, the terminal device indicates, by using the second indication information, a resource group not used by the terminal device in one CG period. In this way, the access network device may allocate the resource group currently not used by the terminal device to another terminal device for use, so that resources can be saved, and a network capacity can be improved.

In a possible design, the resource is a frequency domain resource associated with a CG physical uplink shared channel transmission occasion CG PUSCH transmission occasion included in one configured grant CG period. Alternatively, the resource is a time domain resource associated with a CG PUSCH transmission occasion included in one CG period.

In a possible design, the resource is one resource element RE or one resource block RB in a frequency domain resource associated with a CG PUSCH transmission occasion included in one CG period. Alternatively, the resource is one slot, one mini-slot, or one transport block TB in a time domain resource associated with a CG PUSCH transmission occasion included in one CG period.

Based on the foregoing two possible designs, a plurality of possible designs are provided for a definition of the resource.

In a possible design, a maximum quantity of physical uplink shared channel transmission occasions PUSCH occasions included in one configured grant CG period is greater than 40.

In a possible design, a quantity of PUSCH transmission occasions included in one CG period is 80.

Based on the foregoing two possible designs, with reference to NR-U and considering that a packet quantity in XR may be large, the maximum quantity of PUSCH transmission occasions included in one CG period may be set to be greater than 40 (for example, up to 80), to ensure normal transmission of an XR service.

In a possible design, third indication information is received from the terminal device, where the third indication information indicates a decoding mode of the second indication information.

In a possible design, before the second indication information is sent to the access network device, the method further includes: sending fourth indication information to the terminal device, where the fourth indication information indicates an expected decoding mode of the second indication information.

Based on the foregoing two possible designs, the terminal device or the access network device may select, based on different bit quantity requirements or other requirements such as a complexity requirement and a resource configuration flexibility requirement, appropriate second indication information indicating a resource group (or a resource) not used by the terminal device, so that indication is more flexible.

In a possible design, fifth indication information is received from the terminal device, where the fifth indication information indicates one or more configured grant CG periods associated with the second indication information.

In a possible design, the fifth indication information includes an index of the one or more CG periods. Alternatively, the fifth indication information includes a start position and a length of the one or more CG periods.

Based on the foregoing two possible designs, a range of a CG period to which the second indication information is applicable may be made clear. When a service size remains unchanged for a long time, the second indication information may be sent once, and a plurality of CG periods to which the second indication information is applicable may be indicated by the fifth indication information, so that signaling overheads can be reduced.

According to a fifth aspect, a communication apparatus is provided. For beneficial effects, refer to descriptions in the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function. In a possible design, the communication apparatus includes a transceiver module, configured to: receive first indication information from an access network device, and send second indication information to the access network device. The first indication information indicates a transmission resource configured by the access network device for a terminal device, and the transmission resource includes a plurality of resources. The second indication information indicates a first resource group, and the first resource group includes one or more resource groups not used by the terminal device. Each resource group includes a plurality of resources, and the first resource group is a part or all of the transmission resource. These modules may perform corresponding functions in the method example in the first aspect. For details, refer to detailed descriptions in the method example. Details are not described herein again. According to a sixth aspect, a communication apparatus is provided. For beneficial effects, refer to descriptions in the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function. In a possible design, the communication apparatus includes a transceiver module, configured to: send first indication information to a terminal device, and receive second indication information from the terminal device. The first indication information indicates a transmission resource configured by an access network device for the terminal device, and the transmission resource includes a plurality of resources. The second indication information indicates a first resource group, and the first resource group includes one or more resource groups not used by the terminal device. The resource group includes a plurality of resources, and the first resource group is a part or all of the transmission resource. These modules may perform corresponding functions in the method example in the second aspect. For details, refer to detailed descriptions in the method example. Details are not described herein again. According to a seventh aspect, a communication apparatus is provided. For beneficial effects, refer to descriptions in the third aspect. Details are not described herein again. The communication apparatus has a function of implementing the behavior in the method instance in the third aspect. The function may be implemented by hardware, or may be implemented by hardware executing corresponding software. The hardware or the software includes one or more modules corresponding to the foregoing function. In a possible design, the communication apparatus includes a transceiver module, configured to: receive first indication information from an access network device, and send second indication information to the access network device. The first indication information indicates a transmission resource configured by the access network device for a terminal device, and the transmission resource includes a plurality of resources. The second indication information indicates a bitmap, each bit in the bitmap indicates whether a resource group associated with the bit is used by the terminal device, and the resource group includes one or more resources in the transmission resource. These modules may perform corresponding functions in the method example in the third aspect. For details, refer to detailed descriptions in the method example. Details are not described herein again.

According to an eighth aspect, a communication apparatus is provided. For beneficial effects, refer to descriptions in the fourth aspect. Details are not described herein again. The communication apparatus has a function of implementing the behavior in the method instance in the fourth aspect. The function may be implemented by hardware, or may be implemented by hardware executing corresponding software. The hardware or the software includes one or more modules corresponding to the foregoing function. In a possible design, the communication apparatus includes a transceiver module, configured to: send first indication information to a terminal device, and receive second indication information from the terminal device. The first indication information indicates a transmission resource configured by an access network device for the terminal device, and the transmission resource includes a plurality of resources. The second indication information indicates a bitmap, each bit in the bitmap indicates whether a resource group associated with the bit is used by the terminal device, and the resource group includes one or more resources in the transmission resource. These modules may perform corresponding functions in the method example in the fourth aspect. For details, refer to detailed descriptions in the method example. Details are not described herein again.

According to a ninth aspect, a communication apparatus is provided. The communication apparatus may be the terminal device in the foregoing method embodiments, or may be a chip disposed in the terminal device. The communication apparatus may alternatively be the access network device in the foregoing method embodiments, or may be a chip disposed in the access network device. The communication apparatus includes one or more processors. The one or more processors are configured to run a computer program or instructions. When the one or more processors execute the computer instructions or the instructions, the communication apparatus is enabled to perform the communication method according to any one of the first aspect or the possible designs of the first aspect, perform the communication method according to any one of the second aspect or the possible designs of the second aspect, perform the communication method according to any one of the third aspect or the possible designs of the third aspect, or perform the communication method according to any one of the fourth aspect or the possible designs of the fourth aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a tenth aspect, an embodiment of this application provides a communication apparatus. The communication apparatus may be the terminal device in the foregoing method embodiments, or may be a chip disposed in the terminal device. The communication apparatus may alternatively be the access network device in the foregoing method embodiments, or may be a chip disposed in the access network device. The communication apparatus includes an input/output interface and a logic circuit. The input/output interface is configured to input and/or output information. The logic circuit is configured to perform the communication method according to any one of the first aspect or the possible designs of the first aspect, perform the communication method according to any one of the second aspect or the possible designs of the second aspect, perform the communication method according to any one of the third aspect or the possible designs of the third aspect, or perform the communication method according to any one of the fourth aspect or the possible designs of the fourth aspect, and perform processing based on information and/or generate information.

According to an eleventh aspect, a computer program product is provided. The computer program product includes computer program code. When the computer program code is run, the methods performed by the terminal device in the foregoing aspects are performed.

According to a twelfth aspect, a computer program product is provided. The computer program product includes computer program code. When the computer program code is run, the methods performed by the access network device in the foregoing aspects are performed.

According to a thirteenth aspect, this application provides a chip system. The chip system includes a processor, configured to implement functions of the terminal device in the methods in the foregoing aspects. In a possible design, the chip system further includes a memory, configured to store program instructions and/or data. The chip system may include a chip, or may include a chip and another discrete component.

According to a fourteenth aspect, this application provides a chip system. The chip system includes a processor, configured to implement functions of the access network device in the methods in the foregoing aspects. In a possible design, the chip system further includes a memory, configured to store program instructions and/or data. The chip system may include a chip, or may include a chip and another discrete component.

According to a fifteenth aspect, this application provides a computer-readable storage medium. The computer-readable storage medium stores a computer program. When the computer program is run, the methods performed by the terminal device in the foregoing aspects are implemented.

According to a sixteenth aspect, this application provides a computer-readable storage medium. The computer-readable storage medium stores a computer program. When the computer program is run, the methods performed by the access network device in the foregoing aspects are implemented.

According to a seventeenth aspect, an embodiment of this application provides a computer program. When the computer program is run on a computer, the communication method according to any one of the first aspect or the possible designs of the first aspect is performed, the communication method according to any one of the second aspect or the possible designs of the second aspect is performed, the communication method according to any one of the third aspect or the possible designs of the third aspect is performed, or the communication method according to any one of the fourth aspect or the possible designs of the fourth aspect is performed.

According to an eighteenth aspect, a communication system is provided. The communication system may include the communication apparatus according to any one of the fifth aspect and the communication apparatus according to any one of the sixth aspect, or include the communication apparatus according to any one of the seventh aspect and the communication apparatus according to any one of the eighth aspect.

### BRIEF DESCRIPTION OF DRAWINGS

FIG. 1 is a diagram of an XR technology according to an embodiment of this application;
FIG. 2 is a diagram of an architecture of a cloud VR/AR communication network according to an embodiment of this application;
FIG. 3 is a diagram of a frame structure of a video frame according to an embodiment of this application;
FIG. 4 is a flowchart of CG scheduling according to an embodiment of this application;
FIG. 5 is a diagram of a PUSCH repetition type A according to an embodiment of this application;
FIG. 6 is a diagram of a PUSCH repetition type B according to an embodiment of this application;
FIG. 7 is a diagram of size mismatch between an XR service and a configured CG resource according to an embodiment of this application;
FIG. 8 is a diagram of a communication system according to an embodiment of this application;
FIG. 9 is a diagram of composition of a communication apparatus according to an embodiment of this application;
FIG. 10 is a flowchart of a communication method according to an embodiment of this application;
FIG. 11 is a diagram of resource group occupation according to an embodiment of this application;
FIG. 12 is a diagram of resource group occupation according to an embodiment of this application;
FIG. 13 is a diagram of resource occupation according to an embodiment of this application;
FIG. 14 is a diagram of resource occupation according to an embodiment of this application;
FIG. 15 is a diagram of a communication apparatus according to an embodiment of this application; and
FIG. 16 is a diagram of composition of a communication apparatus according to an embodiment of this application.

### DESCRIPTION OF EMBODIMENTS

Before embodiments of this application are described, technical terms in embodiments of this application are described.

**5th generation (5th-generation, 5G) communication system:** With continuous development of the 5G communication system, a data transmission latency is continuously reduced, and a transmission capacity is larger. Some multimedia services with strong real-time performance and a high data capacity requirement, for example, video transmission, cloud gaming (cloud gaming, CG), and extended reality (extended reality, XR), gradually penetrate into the 5G communication system. A human interaction manner will change from two-dimensional (two-dimensional, 2D) interaction to more efficient three-dimensional (three-dimensional, 3D) interaction, and a 3D visual interaction system may depend on development of XR.

**XR technology:** The XR technology refers to all real-and-virtual combined environments and related human-machine interaction that are generated by computer technologies and wearable devices. With a rapid increase of a communication transmission rate, a real-time video transmission service has gradually become one of core services in a current network. With continuous progress and improvement of the XR technology, a related industry is also booming.

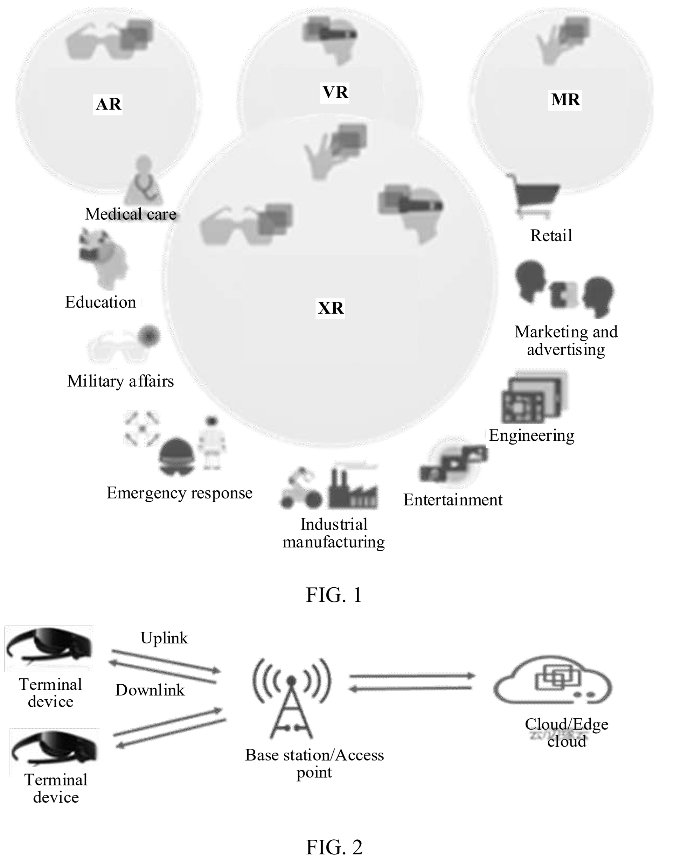

For example, as shown in FIG. 1, the XR technology may include virtual reality (virtual reality, VR), augmented reality (augmented Reality, AR), mixed reality (mixed reality, MR), and the like. **VR technology:** As a type of XR technology, the VR technology has entered various fields closely related to production and life of people, for example, education, entertainment, military affairs, medical care, environmental protection, transportation, and public health. Compared with a conventional video service, VR has advantages such as multiple viewing angles and strong interaction, so that brand-new visual experience is provided for a user. VR integrates a plurality of technologies such as computer graphics and multimedia, to simulate functions of human sensory organs, for example, a visual sense, an auditory sense, and a tactile sense. In this way, people immerse in a virtual world generated by a computer, feeling as if they are there, and can perform real-time communication by using a language, a gesture, and the like. This enhances an immersion sense. By using the VR technology, people feel reality of the real world, and can further break through restrictions of conditions such as time and space, to have wonderful experience of entering the virtual world.

**AR technology:** In the AR technology, by using computer technologies, virtual information is superimposed to the real world, is displayed through devices such as a mobile phone, a tablet computer, and glasses, and is perceived by people. In this way, reality and virtuality are merged, so that the real world is enriched. In short, more information is given to a real object, to enhance a stereoscopic sense, and enhance a visual effect and interactive experience.

**Cloud virtual reality (cloud VR) and cloud augmented reality (cloud AR):** Cloud virtual reality (cloud VR) and cloud augmented reality (cloud AR) introduce concepts and technologies of cloud computing and cloud rendering into VR/AR service applications. Through a high-rate and stable network, a display output, an audio output, and the like on a cloud are encoded, compressed, and then transmitted to user equipment (user equipment, UE). In this way, VR/AR service content is migrated to the cloud and rendered to the cloud, and a VR/AR terminal device can also meet lightweight and mobility requirements.

For example, FIG. 2 is a diagram of an architecture of a cloud VR/AR communication network. The VR/AR terminal device may be connected to the network via a base station or another access point, and obtain a VR/AR service from the cloud.

**XR service:** A video frame of the XR service is sent periodically, and a period of the video frame is a reciprocal of a frame rate, where the frame rate is a quantity of frames included in a video per second, and is in a unit of fps (frame per second). Usually, a minimum video frame rate is 24 fps. When the frame rate is lower than 24 fps, human eyes can feel obvious freezing. For a video with slow image change, 30 fps is usually sufficient. For a video with sharp image change, 60 fps is usually needed.

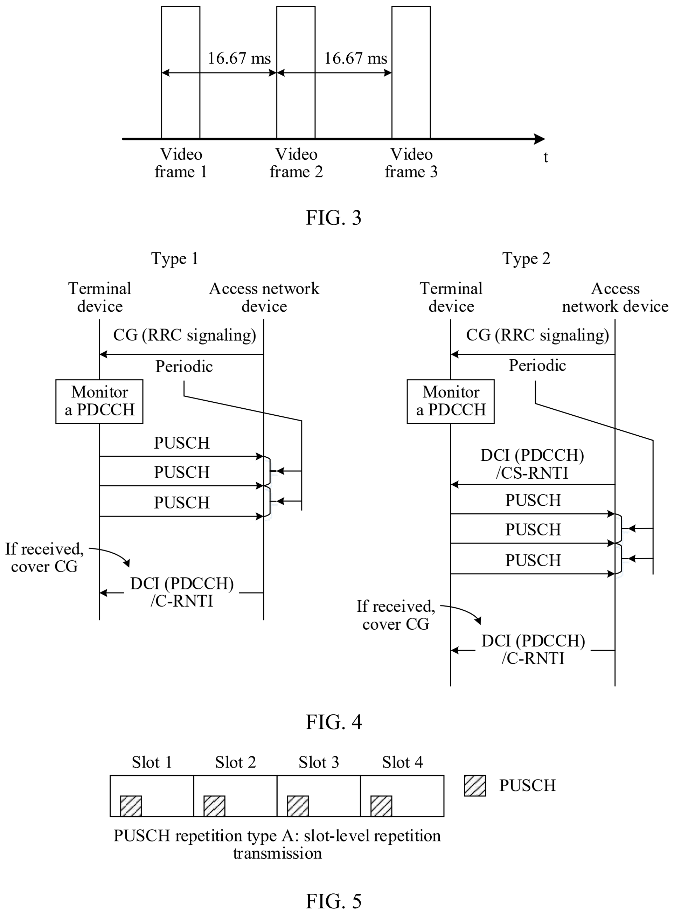

For example, as shown in FIG. 3, a frame rate of 60 fps is used as an example, and a period of a video frame is 1/60=16.67 ms. If a time length of a video of 60 fps is the same as that of a video of 30 fps, a quantity of images of the video of 60 fps is twice that of the video of 30 fps. Therefore, a size of the video of 60 fps is also about twice that of the video of 30 fps. Therefore, the frame rate is in direct proportion to a video size. A higher frame rate indicates smoother video play. In the XR service, common settings of the frame rate are 30 fps, 60 fps, 90 fps, and 120 fps. When the frame rate of the XR service is 30 fps, a video frame arrival period is 33.33 ms. When the frame rate of the XR service is 60 fps, a video frame arrival period is 16.67 ms. When the frame rate of the XR service is 90 fps, a video frame arrival period is 11.11 ms. When the frame rate of the XR service is 120 fps, a video frame arrival period is 8.33 ms.

The XR service is extremely sensitive to a rate and a latency of a data packet, to meet a requirement of a user for ultimate smooth experience. For a VR/AR service type, a data packet delay budget (packet delay budget, PDB) is 10 ms. The PDB is defined as a time threshold from time when a data packet or a video frame arrives at an access network device to time when the data packet or the video frame is successfully received by a terminal device. In addition, 60 fps is used as an example. A data rate at an application layer may reach 45 Mbps, and an average packet size of each video frame is 750 kbit.

The XR service and the video transmission service usually have a large data amount. For example, a size of a 4K video frame is about 30 kb to 100 kb. In addition, sizes of video frames usually change. Because compression rates and frame types of the video frames are different, the sizes of the video frames change greatly.

In addition, different XR services usually have different uplink and downlink service models. A display change of scene content in VR is caused by a posture or a position (an action). Position information and posture information are mainly uploaded in VR, and a data amount is small, and is usually only dozens of kbps. Downlink transmission is mainly for a rendered video stream, and a data amount is large, and may reach dozens of to hundreds of Mbps. Different from that in VR, a display change of scene content in AR is caused by a change of a fixation focus target and a change of a spatial relationship (an action) between a position and a fixation point. Visual information (including a depth) needed for perception is uploaded in AR. Therefore, uplink transmission is mainly for a clear and stable picture or video stream with a large data amount, or may be for some extracted environment feature information. Based on industry research and evaluation, for an interactive AR service, a network uplink rate needs to be approximately 2 Mbps to meet initial experience and 10 Mbps to 20 Mbps to meet advanced experience. Compared with cloud VR, cloud AR has a higher requirement on an uplink transmission rate and is more challenging in uplink transmission.

**Uplink configured grant (configured grant, CG):** The uplink configured grant is uplink configured scheduling (configured scheduling, CS), and is suitable for periodic uplink service transmission. The CG means that in an uplink transmission process, an uplink scheduling resource only needs to be allocated once by using radio resource control (radio resource control, RRC) signaling or a physical downlink control channel (physical downlink control channel, PDCCH), and then uplink transmission may be performed by periodically and repeatedly using a same time-frequency resource.

The CG may include two types. In a type 1, a related parameter of CG transmission is configured by using the RRC signaling, for example, a CG period, a CG time domain resource, and a CG frequency domain resource, and a corresponding CG resource is activated by using the RRC signaling. In a type 2, a related parameter of CG transmission is configured by using the RRC signaling, for example, a CG period, and a corresponding CG resource is configured and activated by using the PDCCH.

For example, as shown in FIG. 4, a CG scheduling procedure of the type 1 is as follows:
1. An access network device configures a related parameter of a CG resource by using RRC signaling, including a period, a CG time domain resource, a CG frequency domain resource, and the like. Herein, parameters (for example, corresponding to different periods) of a plurality of CG resources may be included. In addition, the access network device may activate the corresponding CG resource by using the RRC signaling.
2. A medium access control (media access control, MAC) entity determines, based on a CG configuration, a slot or a symbol that is of the CG resource and that periodically takes effect, and transmits uplink data, namely, a physical uplink shared channel (physical uplink shared channel, PUSCH), in the slot or the symbol that takes effect.
3. After service transmission is completed, the access network device delivers downlink control information (downlink control information, DCI), to deactivate the CG configuration and release the CG resource.

For example, as shown in FIG. 4, a CG scheduling procedure of the type 2 is as follows:
1. An access network device configures a related parameter of a CG resource by using RRC signaling, including a CG period and the like. Herein, parameters (for example, corresponding to different periods) of a plurality of CG resources may be included.
2. The access network device activates CG transmission by using a PDCCH, and indicates, by using a resource allocation field, a time domain resource and a frequency domain resource specifically allocated for the CG transmission.
3. A MAC entity determines, based on a CG configuration, a slot or a symbol that is of the CG resource and that periodically takes effect, and transmits uplink data in the slot or the symbol that takes effect.
4. After service transmission is completed, the access network device delivers DCI, to deactivate the CG configuration and release the CG resource.

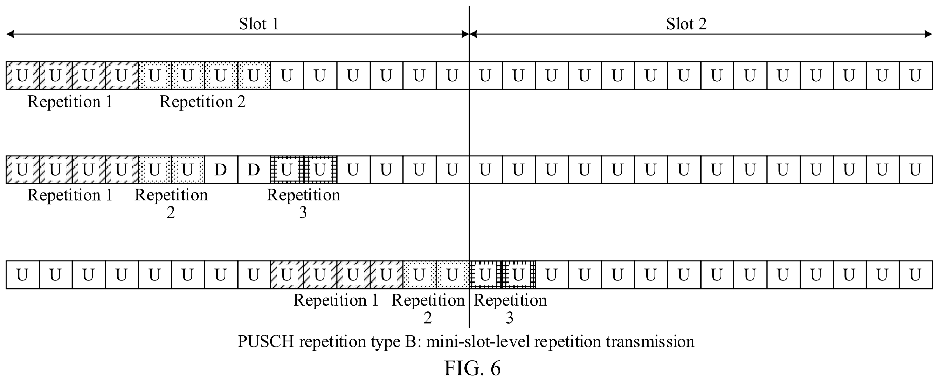

Usually, in CG, only one transmission resource can be configured in each period, in other words, only one transport block (transport block, TB) can be transmitted. For a service having a high reliability requirement, for example, ultra-reliable low-latency communication (ultra-reliable low-latency communication, URLLC), the CG supports configuration of a plurality of transmission resources in one period, but these transmission resources are used for repetition transmission of same data, namely, different redundancy versions (redundancy version, RV) of a same TB. The RV is designed to implement incremental redundancy (incremental redundancy, IR) hybrid automatic repeat request (hybrid automatic repeat request, HARQ) transmission. To be specific, redundant bits generated by an encoder are divided into several groups, each RV defines a transmission start point, and different RVs are used for initial transmission and all retransmission, to implement gradual accumulation of redundant bits and complete an incremental redundancy HARQ operation. In the CG, there may be two types of PUSCH repetition transmission. As shown in FIG. 5, a PUSCH repetition type A is slot-level repetition transmission, to be specific, different RVs of a same TB are transmitted in a plurality of consecutive slots, and time-frequency resource configurations in all the slots are completely the same. As shown in FIG. 6, a PUSCH repetition type B is mini-slot (mini-slot)-level repetition transmission, to be specific, different RVs of a same TB are transmitted in a plurality of consecutive mini-slots, and time-frequency resource configurations in all the mini-slots are completely the same. Usually, one slot includes 14 symbols, and one mini-slot includes two symbols or seven symbols. In one slot, there is a symbol used for uplink transmission (marked as U) and a symbol used for downlink transmission (marked as D). Therefore, the mini-slot (mini-slot)-level repetition transmission is not necessarily continuous at a symbol level. In addition, one mini-slot (mini-slot)-level repetition transmission may alternatively be performed across a plurality of slots.

Based on the foregoing descriptions of the XR service and the CG period, for a licensed spectrum, in a CG transmission mechanism, only one TB can be transmitted in each period. However, because transmission of each video frame in the XR service usually needs to be completed by using a plurality of TBs, the foregoing CG transmission mechanism is not suitable for the XR service with the large data amount. In addition, a size of a configured CG resource is fixed, and cannot match an XR service frame characterized by a dynamically variable size. If a small quantity of resources are configured, transmission of data that is not transmitted is postponed to a next period. This increases an uplink transmission latency and deteriorates XR user experience. If sufficient resources are configured, a waste of resources is caused, and a network capacity is affected.

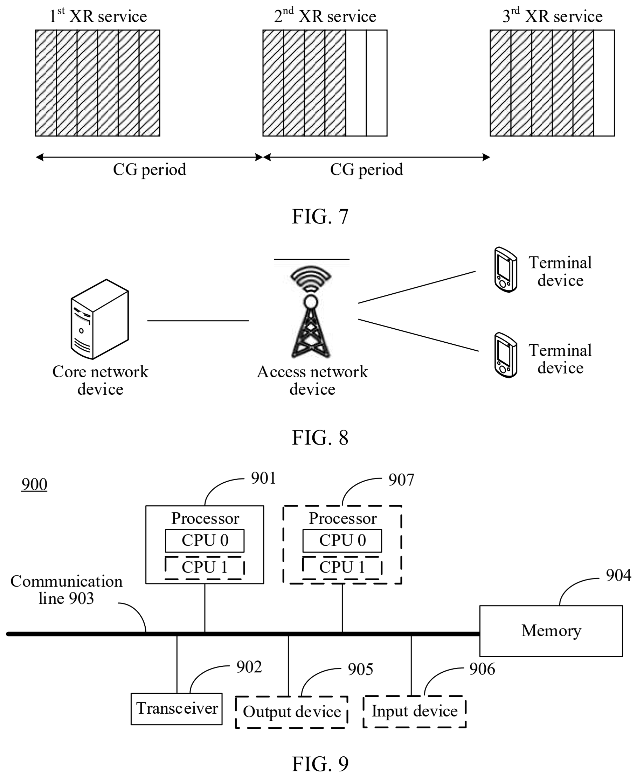

For example, as shown in FIG. 7, a CG resource preconfigured in one CG period includes six slots. For a 1^{st} XR service, the configured CG resource is just enough for transmission of an XR service #1. For a 2^{nd} XR service, the service is small, and the configured CG resource has a remaining quantity of two slots. For a 3^{rd} XR service, the service is small, and the configured CG resource has a remaining quantity of one slot.

To resolve a technical problem that the CG transmission mechanism is not suitable for an XR service with a large data amount, embodiments of this application put forward that for the licensed spectrum, in the CG transmission mechanism, a plurality of TBs may be transmitted in each CG period, to ensure normal transmission of an XR service with a large data amount.

To resolve a technical problem that the small quantity of configured resources increase the uplink transmission latency, embodiments of this application put forward that when a small quantity of resources are configured, the terminal device may send a request to the access network device, to request the access network device to configure an additional resource or re-configure a resource for the terminal device, to avoid postponing the transmission of the data that is not transmitted to the next period, shorten the uplink transmission latency, and improve the XR user experience.

To resolve a technical problem that a large quantity of configured resources cause the waste of resources and affect the network capacity, embodiments of this application provide a communication method. In the communication method, the terminal device may receive first indication information from the access network device, and send second indication information to the access network device. The first indication information indicates a transmission resource configured by the access network device for the terminal device, and the transmission resource includes a plurality of resources. The second indication information indicates a first resource group, and the first resource group includes one or more resource groups not used by the terminal device. Each resource group includes a plurality of resources, and the first resource group is a part or all of the transmission resource.

In embodiments of this application, the terminal device may indicate one or more resource groups not used by the terminal device to the access network device. In this way, the access network device may allocate the one or more resource groups not used by the terminal device to another terminal device, to reduce a waste of uplink resources and improve the network capacity.

The following describes implementations of embodiments of this application in detail with reference to the accompanying drawings in this specification.

The communication method provided in embodiments of this application may be applied to any communication system. The communication system may be a third generation partnership project (third generation partnership project, 3GPP) communication system, for example, a long term evolution (long term evolution, LTE) system, or may be a 5G mobile communication system, a new radio (new radio, NR) communication system, or a new radio vehicle to everything (vehicle to everything, NR V2X) system. The communication method may also be applied to an LTE and 5G hybrid networking system, or may be applied to a non-terrestrial network (non-terrestrial network, NTN) system, a device-to-device (device-to-device, D2D) communication system, a machine-to-machine (machine-to-machine, M2M) communication system, an internet of things (internet of things, IoT), and another next generation communication system, for example, a future communication system like 6G. Alternatively, the communication system may be a non-3GPP communication system. This is not limited.

The following uses FIG. 8 as an example to describe the communication system provided in embodiments of this application.

FIG. 8 is a diagram of a communication system according to an embodiment of this application. As shown in FIG. 8, the communication system may include one or more terminal devices, an access network device (or described as a radio access network device), and a core network device. In FIG. 8, the terminal device may be located in cell coverage of the access network device, and the terminal device may be connected to the access network device in a wireless manner. For example, the terminal device may perform air interface communication with the access network device on an uplink (uplink, UL) or a downlink (downlink, DL). For example, the terminal device may send uplink data to the access network device in an UL direction on a physical uplink shared channel (physical uplink shared channel, PUSCH), and the access network device may send downlink data to the terminal device in a DL direction on a physical downlink shared channel (physical downlink shared channel, PDSCH).

The terminal device in FIG. 8 may be a device having a wireless transceiver function or a chip or a chip system that can be disposed in the device, may allow a user to access a network, and is a device configured to provide voice and/or data connectivity for the user. The terminal device may be located at a fixed position, or may be mobile. The terminal device may also be referred to as user equipment (user equipment, UE), a subscriber unit (subscriber unit), a terminal (terminal), a mobile station (mobile station, MS), a mobile terminal (mobile terminal, MT), or the like. Specifically, the terminal device in FIG. 8 may be a cellular phone (cellular phone), a smartphone (smartphone), a wireless data card, a mobile phone (mobile phone), a personal digital assistant (personal digital assistant, PDA) computer, a tablet computer or a computer having a wireless transceiver function, a wireless modem (modem), a handheld device (handset), or a laptop computer (laptop computer). Alternatively, the terminal device may be a VR terminal, an AR terminal, a wireless terminal in industrial control, a wireless terminal in self driving, a wireless terminal in telemedicine, a wireless terminal in a smart grid, a wireless terminal in transportation safety, a wireless terminal in a smart city (smart city), a wireless terminal in a smart home (smart home), a machine type communication (machine type communication, MTC) terminal, a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

The access network device in FIG. 8 may be any device that is deployed in an access network and that can perform wireless communication with the terminal device, may be described as an access device that is used by the terminal device to access the communication system in a wireless manner, or may be a chip or a chip system that can be disposed in the device, and is mainly configured to implement functions such as a wireless physical control function, resource scheduling and radio resource management, radio access control, and mobility management. The access network device may be further connected to the core network device in a wireless or wired manner. Specifically, the access network device may be a device that supports wired access, or may be a device that supports wireless access. For example, the access network device may be an access network (access network, AN) device/a radio access network (radio access network, RAN) device, and includes a plurality of AN/RAN nodes. The AN/RAN node may be an access point (access point, AP), a NodeB (NodeB, NB), a macro base station, a micro base station (or described as a small cell), a pico base station, a balloon station, a relay station, an enhanced NodeB (enhanced NodeB, eNB), a next generation eNB (next generation eNB, ng-eNB), a next generation NodeB (next generation NodeB, gNB), a base station in a 5G communication system, a base station in a future mobile communication system or an access node in a wireless fidelity (wireless fidelity, Wi-Fi) system, a transmission reception point (transmission reception point, TRP), a transmission point (transmission point, TP), a transmission measurement function (transmission measurement function, TMF), a wearable device, a vehicle-mounted device, another access node, or the like. A specific technology and a specific device form that are used by the access network device are not limited in embodiments of this application.

Alternatively, the access network device may be of a central unit (central unit, CU)/distributed unit (distributed unit, DU) architecture. In this case, the access network device may include two network elements: a CU and a DU. Alternatively, the access network device may be of a control plane-user plane (control plane-user plane, CP-UP) architecture. In this case, the access network device may include three network elements: a control plane of a CU (CU-CP), a user plane of the CU (CU-UP), and a DU. This is not limited.

Optionally, the access network device and the terminal device may be deployed on land, where the deployment includes indoor or outdoor, and handheld or vehicle-mounted deployment; or may be deployed on water; or may be deployed on an airplane, a balloon, and a satellite in air. Application scenarios of the access network device and the terminal device are not limited in embodiments of this application.

Optionally, embodiments of this application are applicable to downlink signal transmission, uplink signal transmission, and D2D signal transmission. For the downlink signal transmission, a sending device is an access network device, and correspondingly, a receiving device is a terminal device. For the uplink signal transmission, a sending device is a terminal device, and correspondingly, a receiving device is an access network device. For the D2D signal transmission, a sending device is a terminal device, and correspondingly, a receiving device is also a terminal device. A direction of signal transmission is not limited in embodiments of this application.

Optionally, communication between the access network device and the terminal device and communication between terminal devices may be performed by using a licensed spectrum, an unlicensed spectrum, or both a licensed spectrum and an unlicensed spectrum. A spectrum below 6 GHz, a spectrum above 6 GHz, or both a spectrum below 6 GHz and a spectrum above 6 GHz may be used for the communication between the access network device and the terminal device and the communication between the terminal devices. Spectrum resources used between the access network device and the terminal device are not limited in embodiments of this application.

The core network device in FIG. 8 is mainly responsible for providing a user connection, performing user management, and completing service bearing, and serves as a bearer network to provide an interface to an external network.

Optionally, the core network device and the access network device may be different physical devices that are independent of each other, or functions of the core network device and logical functions of the access network device may be integrated into a same physical device, or some functions of the core network device and some functions of the access network device may be integrated into one physical device, or the core network device and the access network device may be disposed in a chip or a chip system of the foregoing device. This is not limited.

It should be noted that the terminal device, the access network device, and the core network device in embodiments of this application each may be one or more chips, or a system on a chip (system on a chip, SoC), or the like. FIG. 8 is merely an example accompany drawing, and a quantity of devices included in FIG. 8 is not limited. In addition, in addition to the devices shown in FIG. 8, the communication system may further include another device, for example, may further include a wireless relay device and a wireless backhaul device. Names of the devices and the links in FIG. 8 are not limited. In addition to the names shown in FIG. 8, the devices and the links may further have other names. This is not limited.

During specific implementation, each terminal device, the access network device, and the core network device shown in FIG. 8 may use a composition structure shown in FIG. 9, or include parts shown in FIG. 9. FIG. 9 is a diagram of composition of a communication apparatus 900 according to an embodiment of this application. The communication apparatus 900 may be a terminal device or a chip or a system on a chip in the terminal device, may be an access network device or a chip or a system on a chip in the access network device, or may be a core network device or a chip or a system on a chip in the core network device. As shown in FIG. 9, the communication apparatus 900 includes a processor 901, a transceiver 902, and a communication line 903.

Further, the communication apparatus 900 may further include a memory 904. The processor 901, the memory 904, and the transceiver 902 may be connected through the communication line 903. The processor 901 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 901 may be another apparatus having a processing function, for example, a circuit, a component, or a software module. This is not limited.

The transceiver 902 is configured to communicate with another device or another communication network. The another communication network may be an Ethernet, a radio access network (radio access network, RAN), a wireless local area network (wireless local area network, WLAN), or the like. The transceiver 902 may be a module, a circuit, a transceiver, or any apparatus that can implement communication.

The communication line 903 is used for transmission of information between parts included in the communication apparatus 900.

The memory 904 is configured to store instructions. The instructions may be a computer program. The memory 904 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 904 may exist independently of the processor 901, or may be integrated with the processor 901. The memory 904 may be configured to store instructions, program code, some data, or the like. The memory 904 may be located in the communication apparatus 900, or may be located outside the communication apparatus 900. This is not limited. The processor 901 is configured to execute the instructions stored in the memory 904, to implement a communication method provided in the following embodiments of this application.

In an example, the processor 901 may include one or more CPUs, for example, a CPU 0 and a CPU 1 in FIG. 9.

In an optional implementation, the communication apparatus 900 includes a plurality of processors. For example, in addition to the processor 901 in FIG. 9, the communication apparatus 900 may further include a processor 907.

In an optional implementation, the communication apparatus 900 further includes an output device 905 and an input device 906. For example, the input device 906 is a device like a keyboard, a mouse, a microphone, or a joystick, and the output device 905 is a device like a display or a speaker (speaker).

It should be noted that the communication apparatus 900 may be a desktop computer, a portable computer, a network server, a mobile phone, a tablet computer, a wireless terminal, an embedded device, a chip system, or a device having a structure similar to that in FIG. 9. In addition, the composition structure shown in FIG. 9 does not constitute a limitation on the communication apparatus. In addition to the parts shown in FIG. 9, the communication apparatus may include more or fewer parts than those shown in the figure, or combine some parts, or have different part arrangements.

In this embodiment of this application, the chip system may include a chip, or may include a chip and another discrete component.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

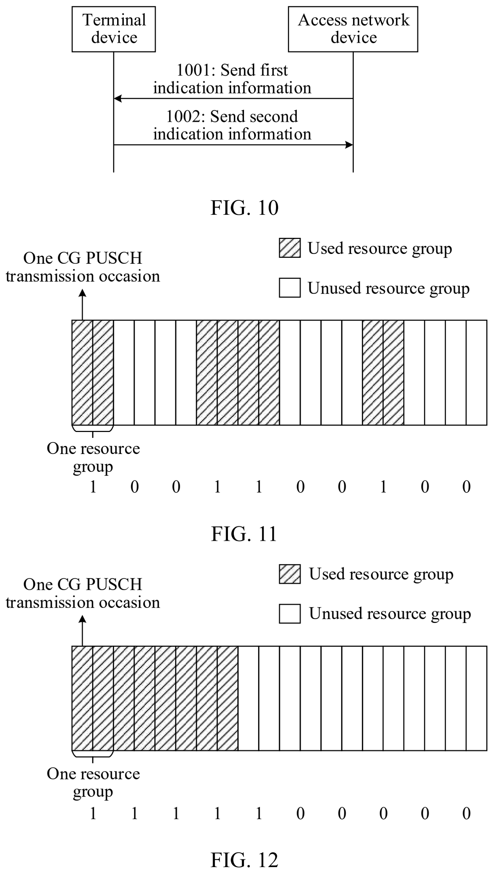

With reference to the communication system shown in FIG. 8, refer to FIG. 10. A communication method provided in embodiments of this application is described. A terminal device may be any terminal device in the communication system shown in FIG. 8, and an access network device may be any access network device in the communication system shown in FIG. 8. The terminal device and the access network device described in the following embodiments each may have the parts shown in FIG. 9. Processing performed by a single execution body (the terminal device or the access network device) shown in embodiments of this application may alternatively be divided into processing performed by a plurality of execution bodies. These execution bodies may be logically and/or physically separated. This is not limited.

FIG. 10 is a flowchart of a communication method according to an embodiment of this application. As shown in FIG. 10, the method may include the following steps.

Step 1001: An access network device sends first indication information to a terminal device. Correspondingly, the terminal device receives the first indication information from the access network device.

The first indication information may indicate a transmission resource configured by the access network device for the terminal device, and the transmission resource includes a plurality of resources.

For example, the access network device may configure a fixed CG resource for the terminal device in each CG period in the uplink CG manner shown in FIG. 4.

Optionally, the resource in the transmission resource is a time domain resource.

The resource may be a time domain resource associated with a CG PUSCH transmission occasion (CG PUSCH transmission occasion) included in one CG period.

In a first example, one CG period includes one CG PUSCH transmission occasion, and the resource may be one CG PUSCH transmission occasion in one CG period.

In a second example, one CG period includes a plurality of CG PUSCH transmission occasions, and the resource may be one CG PUSCH transmission occasion in a plurality of CG PUSCH transmission occasions in one CG period.

In a third example, the resource may be one slot in one CG period.

In a fourth example, the resource may be one TB in one CG period.

In a fifth example, the resource may be one mini-slot in one CG period.

Optionally, the resource in the transmission resource is a frequency domain resource.

The resource may be a frequency domain resource associated with a CG PUSCH transmission occasion included in one CG period.

For example, the resource may be one resource element (resource element, RE) or one resource block (resource block, RB) in a frequency domain resource associated with a CG PUSCH transmission occasion included in one CG period.

In a first example, a frequency domain resource occupied by a CG PUSCH transmission occasion included in one CG period is one RE, and the resource may be a frequency domain resource of one RE occupied by a CG PUSCH transmission occasion included in one CG period.

In a second example, a frequency domain resource occupied by a CG PUSCH transmission occasion included in one CG period is a plurality of REs, and the resource may be one RE in a frequency domain resource occupied by a CG PUSCH transmission occasion included in one CG period.

In a third example, a frequency domain resource occupied by a CG PUSCH transmission occasion included in one CG period is one RB, and the resource may be a frequency domain resource of one RB occupied by a CG PUSCH transmission occasion included in one CG period.

In a fourth example, a frequency domain resource occupied by a CG PUSCH transmission occasion included in one CG period is a plurality of RBs, and the resource may be one RB in a frequency domain resource occupied by a CG PUSCH transmission occasion included in one CG period.

Step 1002: The terminal device sends second indication information to the access network device. Correspondingly, the access network device receives the second indication information from the terminal device.

The second indication information may indicate a first resource group, and the first resource group may include one or more resource groups not used by the terminal device. Each resource group may include a plurality of resources, and the first resource group may be a part or all of the transmission resource.

The one or more resource groups not used by the terminal device may also be described as one or more resource groups that can be canceled (may be canceled, may be released, can be released, may not be used, are not needed, or the like) by the terminal device.

The terminal device may group transmission resources in one CG period, or perform a bundling operation on transmission resources in one CG period, to obtain a plurality of resource groups, and each resource group may include a plurality of resources.

The terminal device may determine the first resource group based on a service requirement of the terminal device, and indicate the first resource group to the access network device by using the second indication information.

For example, the terminal device may determine, based on a data amount and a sending period that are of service data of the terminal device and according to a modulation and coding scheme (modulation and coding scheme, MCS) preconfigured by the access network device, a quantity of resource groups used for transmission of the service data and a position of the used resource groups, to determine the one or more resource groups not used by the terminal device, that is, determine the first resource group.

Optionally, the resource groups included in the first resource group are consecutive resource groups. Alternatively, the resource groups included in the first resource group are discrete resource groups.

The terminal device may transmit the service data by using consecutive resource groups, or may transmit the service data by using discrete resource groups. Correspondingly, the resource groups not used by the terminal device may be consecutive resource groups, or may be discrete resource groups.

Optionally, the terminal device includes the second indication information in uplink control information (uplink control information, UCI) and sends the uplink control information to the access network device.

The UCI may be CG-UCI, or may be newly defined or newly designed UCI. This is not limited. In a first possible design, the second indication information indicates a bitmap.

Each bit in the bitmap indicates whether a resource group associated with the bit is used.

For example, a value of a bit may be set to 1, to indicate that a resource group associated with the bit is used by the terminal device, and a value of a bit may be set to 0, to indicate that a resource group associated with the bit is not used by the terminal device. Alternatively, a value of a bit may be set to 0, to indicate that a resource group associated with the bit is used by the terminal device, and a value of a bit may be set to 1, to indicate that a resource group associated with the bit is not used by the terminal device.

For example, as shown in FIG. 11, an example in which one resource is one CG PUSCH transmission occasion, and the access network device allocates 20 CG PUSCH transmission occasions to the terminal device in one CG period is used. The terminal device may group every two CG PUSCH transmission occasions into one group, and there are 10 resource groups in total in one CG period. The terminal device may use 10 bits in the second indication information to associate 10 resource groups. For example, a value of a bit is set to 1, to indicate that a resource group associated with the bit is used by the terminal device, and a value of a bit is set to 0, to indicate that a resource group associated with the bit is not used by the terminal device, and resources not used by the terminal device may be used by another terminal device. Assuming that resource groups used by the terminal device are a 1^{st}, a 4^{th}, a 5^{th}, and an 8^{th} resource groups, and resource groups not used by the terminal device are a 2^{nd}, a 3^{rd}, a 6^{th}, a 7^{th}, a 9^{th}, and a 10^{th} resource groups, values of the 10 bits in the second indication information may be 1001100100.

In the first possible design, the bitmap may indicate consecutive resource groups not used by the terminal device, or may indicate discrete resource groups not used by the terminal device, so that bits can be saved.

In a second possible design, the second indication information includes start position information and length information of the first resource group.

For example, as shown in FIG. 12, an example in which one resource is one CG PUSCH transmission occasion, and the access network device allocates 20 CG PUSCH transmission occasions to the terminal device in one CG period is used. The terminal device may group two CG PUSCH transmission occasions into one group, and there are 10 resource groups in total in one CG period. Assuming that resource groups not used by the terminal device are a 5^{th} to a 10^{th} resource groups, a start position of the first resource group may be 5, and a length of the first resource group may be 6.

In a third possible design, the second indication information includes end position information and length information of the first resource group.

For example, as shown in FIG. 12, an example in which one resource is one CG PUSCH transmission occasion, and the access network device allocates 20 CG PUSCH transmission occasions to the terminal device in one CG period is used. The terminal device may group two CG PUSCH transmission occasions into one group, and there are 10 resource groups in total in one CG period. Assuming that resource groups not used by the terminal device are a 5^{th} to a 10^{th} resource groups, an end position of the first resource group may be 10, and a length of the first resource group may be 6.

In a fourth possible design, the second indication information includes length information of the first resource group.

The length information may be used to determine the first resource group based on a preset end position or a preset start position of the first resource group.

Different from being directly indicated to the access network device in the second possible design and the third possible design, a start position or an end position of the first resource group may alternatively be preset.

It may be specified that a measurement rule of the first resource group is to calculate backward from a preset start position in one CG period based on the length information that is of the first resource group and that is indicated by the second indication information. Alternatively, it is specified that a measurement rule of the first resource group is to calculate forward from a preset end position in one CG period based on the length information that is of the first resource group and that is indicated by the second indication information, to obtain the first resource group.

Optionally, the measurement rule and the preset end position and/or the preset start position in the measurement rule may be pre-specified in a protocol, may be pre-configured by the access network device, may be indicated by the access network device to the terminal device in advance by using downlink control information (downlink control information, DCI), or may be indicated by the terminal device to the access network device in advance by using the UCI.

Optionally, considering that a change probability of the measurement rule may be small, the measurement rule may alternatively be configured by using RRC signaling, or may be configured by using MAC CE signaling.

For example, as shown in FIG. 12, an example in which one resource is one CG PUSCH transmission occasion, and the access network device allocates 20 CG PUSCH transmission occasions to the terminal device in one CG period is used. The terminal device may group two CG PUSCH transmission occasions into one group, and there are 10 resource groups in total in one CG period. A preset end position may be a last resource group, or a preset start position is a 5^{th} resource group. Assuming that resource groups not used by the terminal device are the 5^{th} to a 10^{th} resource groups, a length of the first resource group may be set to 6, to indicate that the resource groups not used by the terminal device are the 5^{th} to the 10^{th} resource groups.

In a fifth possible design, the second indication information includes start position information of the first resource group.

The start position information may be used to determine the first resource group based on a preset end position of the first resource group. For descriptions of the preset end position, refer to related descriptions in the fourth possible design.

The terminal device includes the start position information in the second indication information, so that the access network device can determine the first resource group based on the start position information and preset end position information.

For example, as shown in FIG. 12, an example in which a preset end position is a last resource group is used. The terminal device may indicate, by using the second indication information, that a start position of the first resource group is 5, to indicate that resource groups not used by the terminal device are a 5^{th} to a 10^{th} resource groups.

In a sixth possible design, the second indication information includes end position information of the first resource group.

The end position information is used to determine the first resource group based on a preset start position of the first resource group. For descriptions of the preset start position, refer to related descriptions in the fourth possible design.

The terminal device includes the end position information in the second indication information, so that the access network device can determine the first resource group based on the end position information and preset start position information.

For example, as shown in FIG. 12, an example in which a preset start position is a 5^{th} resource group is used. The terminal device may indicate, by using the second indication information, that an end position of the first resource group is 10, to indicate that resource groups not used by the terminal device are the 5^{th} to a 10^{th} resource groups.

In a seventh possible design, the second indication information includes start position information and length information of a second resource group.

The second resource group is one or more resource groups occupiable by the terminal device, and the second resource group is a resource that is in the transmission resource and that is other than the first resource group.

The terminal device may alternatively indicate the second resource group by using the second indication information, to implicitly indicate the first resource group.

For example, as shown in FIG. 12, assuming that resource groups used by the terminal device are a 1^{st} to a 4^{th} resource groups, a start position of the second resource group may be 1, and a length of the second resource group may be 4, so that it is implicitly indicated that resource groups not used by the terminal device are a 5^{th} to a 10^{th} resource groups.

In an eighth possible design, the second indication information includes end position information and length information of a second resource group.

For example, as shown in FIG. 12, assuming that resource groups used by the terminal device are a 1^{st} to a 4^{th} resource groups, an end position of the second resource group may be 4, and a length of the second resource group may be 4, so that it is implicitly indicated that resource groups not used by the terminal device are a 5^{th} to a 10^{th} resource groups.

In a ninth possible design, the second indication information includes length information of a second resource group.

The length information is used to determine the second resource group based on a preset end position or a preset start position of the second resource group.

Different from being directly indicated to the access network device in the seventh possible design and the eighth possible design, a start position or an end position of the second resource group may alternatively be preset.

It may be specified that a measurement rule of the second resource group is to calculate backward from a preset start position in one CG period based on the length information that is of the second resource group and that is indicated by the second indication information. Alternatively, it is specified that a measurement rule of the second resource group is to calculate forward from a preset end position in one CG period based on the length information that is of the second resource group and that is indicated by the second indication information, to obtain the second resource group. In this way, the first resource group is implicitly indicated.

Optionally, the measurement rule and the preset end position and/or the preset start position in the measurement rule may be pre-specified in a protocol, may be pre-configured by the access network device, may be indicated by the access network device to the terminal device in advance by using downlink control information (downlink control information, DCI), or may be indicated by the terminal device to the access network device in advance by using the UCI.

Optionally, considering that a change probability of the measurement rule may be small, the measurement rule may alternatively be configured by using RRC signaling, or may be configured by using MAC CE signaling.

For example, as shown in FIG. 12, a preset end position may be a 4^{th} resource group, or a preset start position is a 1^{st} resource group. Assuming that resource groups used by the terminal device are the 1^{st} to the 4^{th} resource groups, a length of the second resource group may be set to 4, to indicate that the resource groups used by the terminal device are the 1^{st} to the 4^{th} resource groups, so that it is implicitly indicated that resource groups not used by the terminal device are a 5^{th} to a 10^{th} resource groups.

In a tenth possible design, the second indication information includes start position information of a second resource group.

The start position information may be used to determine the second resource group based on preset end position information of the second resource group. For descriptions of the preset end position, refer to related descriptions in the ninth possible design.

The terminal device includes the start position information in the second indication information, so that the access network device can determine the second resource group based on the start position information and the preset end position information, and further determine the first resource group.

For example, as shown in FIG. 12, an example in which a preset end position is a 4^{th} resource group is used. The terminal device may indicate, by using the second indication information, that a start position of the second resource group is 1, to indicate that resource groups used by the terminal device are a 1^{st} to the 4^{th} resource groups, so that it is implicitly indicated that resource groups not used by the terminal device are a 5^{th} to a 10^{th} resource groups.

In an eleventh possible design, the second indication information includes end position information of a second resource group.

The end position information may be used to determine the second resource group based on a preset start position of the second resource group. For descriptions of the preset start position, refer to related descriptions in the ninth possible design.

The terminal device includes the end position information in the second indication information, so that the access network device can determine the second resource group based on the end position information and the preset start position information, and further determine the first resource group. For example, as shown in FIG. 12, an example in which a preset start position is a 1^{st} resource group is used. The terminal device may indicate, by using the second indication information, that an end position of the second resource group is 4, to indicate that resource groups used by the terminal device are the 1^{st} to a 4^{th} resource groups, so that it is implicitly indicated that resource groups not used by the terminal device are a 5^{th} to a 10^{th} resource groups.

Optionally, different from indicating, at a granularity of a resource group, the one or more resource groups not used by the terminal device to the access network device by using the second indication information, the terminal device may alternatively indicate, at a granularity of a resource (or it may be understood as that each resource group includes one resource), one or more resources not used by the terminal device to the access network device by using the second indication information.

The one or more resources not used by the terminal device may be referred to as a first resource, and one or more resources used by the terminal device may be referred to as a second resource. The one or more resources included in the first resource may be consecutive resources, or may be discrete resources.

In a first possible design, the second indication information indicates a bitmap.

Each bit in the bitmap indicates whether a resource associated with the bit is used.

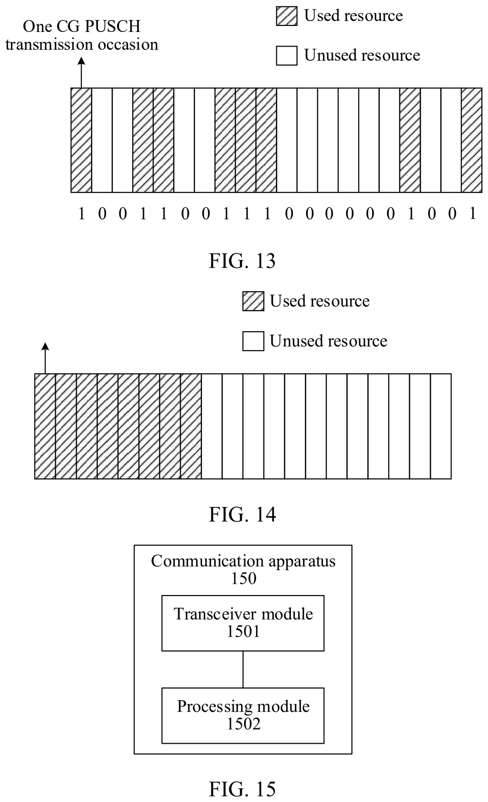

For example, as shown in FIG. 13, an example in which one resource is one CG PUSCH transmission occasion, and the access network device allocates 20 CG PUSCH transmission occasions to the terminal device in one CG period is used. The terminal device may use 20 bits in the second indication information to associate 20 resources. For example, a value of a bit is set to 1, to indicate that a resource associated with the bit is used by the terminal device, and a value of a bit is set to 0, to indicate that a resource associated with the bit is not used by the terminal device, and resources not used by the terminal device may be used by another terminal device. Assuming that resources used by the terminal device are a 1^{st}, a 4^{th}, a 5^{th}, an 8^{th}, a 9^{th} a 10^{th}, a 17^{th}, and a 20^{th} resources, and resources not used by the terminal device are a 2^{nd}, a 3^{rd}, a 6^{th}, a 7^{th}, an 11^{th}, a 12^{th}, a 13^{th}, a 14^{th}, a 15^{th}, a 16^{th}, an 18^{th}, and a 19^{th} resources, values of the 20 bits in the second indication information may be 10011001110000001001.

In the first possible design, the bitmap may indicate consecutive resources not used by the terminal device, or may indicate discrete resources not used by the terminal device, so that bits can be saved. In a second possible design, the second indication information includes start position information and length information of the first resource.

For descriptions of the start position information and the length information of the first resource, refer to the foregoing descriptions of the start position information and the length information of the first resource group. Details are not described again.

For example, as shown in FIG. 14, an example in which one resource is one slot, and the access network device allocates 20 slots to the terminal device in one CG period is used. Assuming that resources not used by the terminal device are a 9^{th} to a 20^{th} resources, a start position of the first resource may be 9, and a length of the first resource may be 12.

In a third possible design, the second indication information includes end position information and length information of the first resource.

For descriptions of the end position information and the length information of the first resource, refer to the foregoing descriptions of the end position information and the length information of the first resource group. Details are not described again.

For example, as shown in FIG. 14, assuming that resources not used by the terminal device are a 9^{th} to a 20^{th} resources, an end position of the first resource may be 20, and a length of the first resource may be 12.

In a fourth possible design, the second indication information includes length information of the first resource.

The length information may be used to determine the first resource based on a preset end position or a preset start position of the first resource.

For descriptions of the length information, the preset end position, or the preset start position of the first resource, refer to the foregoing descriptions of the length information, the preset end position, or the preset start position of the first resource group. Details are not described again.

For example, as shown in FIG. 14, a preset end position may be a last resource, or a preset start position is a 9^{th} resource. Assuming that resources not used by the terminal device are the 9^{th} to a 20^{th} resources, a length of the first resource may be set to 12, to indicate that the resources not used by the terminal device are the 9^{th} to the 20^{th} resources.

In a fifth possible design, the second indication information includes start position information of the first resource.

The start position information may be used to determine the first resource based on a preset end position of the first resource.

For descriptions of the start position information and the preset end position of the first resource, refer to the foregoing descriptions of the start position information and the preset end position of the first resource group. Details are not described again.

For example, as shown in FIG. 14, an example in which a preset end position is a last resource is used. The terminal device may indicate, by using the second indication information, that a start position of the first resource is 9, to indicate that resources not used by the terminal device are a 9^{th} to a 20^{th} resources.

In a sixth possible design, the second indication information includes end position information of the first resource.

The end position information is used to determine the first resource based on a preset start position of the first resource.

For descriptions of the end position information and the preset start position of the first resource, refer to the foregoing descriptions of the end position information and the preset start position of the first resource group. Details are not described again.

For example, as shown in FIG. 14, an example in which a preset start position is a 9^{th} resource is used. The terminal device may indicate, by using the second indication information, that an end position of the first resource is 20, to indicate that resources not used by the terminal device are the 9^{th} to a 20^{th} resources.

In a seventh possible design, the second indication information includes start position information and length information of the second resource.

The second resource is one or more resources occupiable by the terminal device, and the second resource is a resource that is in the transmission resource and that is other than the first resource.

The terminal device may alternatively indicate the second resource by using the second indication information, to implicitly indicate the first resource.

For example, as shown in FIG. 14, assuming that resources used by the terminal device are a 1^{st} to an 8^{th} resources, a start position of the second resource may be 1, and a length of the second resource may be 8, so that it is implicitly indicated that resources not used by the terminal device are a 9^{th} to a 20^{th} resources.

In an eighth possible design, the second indication information includes end position information and length information of the second resource.

For example, as shown in FIG. 14, assuming that resources used by the terminal device are a 1^{st} to an 8^{th} resources, an end position of the second resource may be 8, and a length of the second resource may be 8, so that it is implicitly indicated that resources not used by the terminal device are a 9^{th} to a 20^{th} resources.

In a ninth possible design, the second indication information includes length information of the second resource.

The length information is used to determine the second resource based on a preset end position or a preset start position of the second resource.

For descriptions of the length information, the preset end position, or the preset start position of the second resource, refer to the foregoing descriptions of the length information, the preset end position, or the preset start position of the second resource group. Details are not described again. For example, as shown in FIG. 14, a preset end position may be an 8^{th} resource, or a preset start position is a 1^{st} resource. Assuming that resources used by the terminal device are the 1^{st} to the 8^{th} resources, a length of the second resource may be set to 8, to indicate that the resources used by the terminal device are the 1^{st} to the 8^{th} resources, so that it is implicitly indicated that resources not used by the terminal device are a 9^{th} to a 20^{th} resources.

In a tenth possible design, the second indication information includes start position information of the second resource.

The start position information may be used to determine the second resource based on preset end position information of the second resource.

For example, as shown in FIG. 14, an example in which a preset end position is an 8^{th} resource is used. The terminal device may indicate, by using the second indication information, that a start position of the second resource is 1, to indicate that resources used by the terminal device are a 1^{st} to the 8^{th} resources, so that it is implicitly indicated that resources not used by the terminal device are a 9^{th} to a 20^{th} resources.

In an eleventh possible design, the second indication information includes end position information of the second resource.

The end position information may be used to determine the second resource based on a preset start position of the second resource.

For example, as shown in FIG. 14, an example in which a preset start position is a 1^{st} resource is used. The terminal device may indicate, by using the second indication information, that an end position of the second resource is 8, to indicate that resources used by the terminal device are the 1^{st} to an 8^{th} resources, so that it is implicitly indicated that resources not used by the terminal device are a 9^{th} to a 20^{th} resources.

Optionally, based on the foregoing descriptions of the second indication information, in a special case, the second indication information may indicate that the resource group (or the resource) used by the terminal device is a resource group (or a resource) whose index is an odd number, and indicate that the resource group (or the resource) not used by the terminal device is a resource group (or a resource) whose index is an even number. In this case, in another possible implementation, one bit in the second indication information indicates whether an index of the resource group (or the resource) not used by the terminal device is an even number or an odd number, so that more bits can be saved.

Optionally, the resource group (or the resource) not used by the terminal device may alternatively be indicated by the second indication information according to another rule. For example, the terminal device may indicate, by using the second indication information, that an index of the resource group (or the resource) used by the terminal device is a multiple of 3, or indicate, by using the second indication information, that an index of the resource group (or the resource) not used by the terminal device is not a multiple of 3. Herein, 3 is used as an example, and a multiplier in an indication rule may be any natural number ranging from 2 to a maximum quantity of CG resource groups (or resources) in one CG period. For example, the multiplier may be 2, 4, 8, or the like. This is not limited.

Optionally, a maximum quantity of PUSCH transmission occasions included in one CG period is greater than 40.

For example, a quantity of PUSCH transmission occasions included in one CG period is 80.

NR-U supports a maximum of 40 PUSCH transmission occasions in one CG period. With reference to the NR-U and considering that a packet quantity in XR may be large, the maximum quantity of PUSCH transmission occasions included in one CG period may be set to be greater than 40 (for example, up to 80).

When the second indication information is in the form of the bitmap, and in a worst case, assuming that one resource is one CG PUSCH transmission occasion, the second indication information occupies a maximum of 80 bits.

Based on the method shown in FIG. 10, the terminal device newly adds the second indication information to the CG-UCI or the newly designed UCI, and indicates, by using the second indication information, a resource group or a resource not used by the terminal device in one CG period. In this way, the access network device may allocate the resource group or the resource currently not used by the terminal device to another terminal device for use (for example, indicate, through a Uu interface, the resource group or the resource to the another terminal device for use), to save resources and improve a network capacity. Alternatively, the terminal device may allocate the resource group or the resource currently not used by the terminal device to another terminal device for use (for example, indicate, by using sidelink control signaling (sidelink control information, SCI) signaling, the resource group or the resource to the another terminal device for use).

In addition, because the terminal device indicates the resource currently not used by the terminal device to the access network device, the terminal device cannot perform retransmission scheduling. In this way, a case in which the access network device mistakenly considers that a transmission error occurs and continuously performs retransmission scheduling can be avoided, so that additional signaling overheads are avoided. In addition, the terminal device may enter a sleep state as soon as possible without listening to subsequent CG-DFI, so that power consumption is reduced. Different from a case in FIG. 10 in which the terminal device indicates, on a basis that each resource group includes a plurality of resources, the one or more resource groups not used by the terminal device to the access network device by using the second indication information, the terminal device may alternatively indicate, on a basis that a resource group includes one or more resources, whether a resource group associated with each bit is used by the terminal device to the access network device in the form of the bitmap.

The terminal device may send the second indication information to the access network device, where the second indication information indicates the bitmap, each bit in the bitmap indicates whether a resource group associated with the bit is used by the terminal device, and the resource group includes one or more resources in the transmission resource.

For descriptions of the resource, the resource group, and the bitmap, refer to the foregoing descriptions of the resource, the resource group, and the bitmap. Details are not described again. Optionally, based on the method shown in FIG. 10, when sending the second indication information to the access network device, the terminal device may further send third indication information to the access network device.

The third indication information may indicate a decoding mode of the second indication information.

Optionally, the terminal device includes the third indication information in the UCI or the DCI, and sends the UCI or the DCI to the access network device. The access network device interprets the second indication information based on the received third indication information.

The decoding mode of the second indication information may be any one of the first possible design to the eleventh possible design for indicating the first resource group, or may be any one of the first possible design to the eleventh possible design for indicating the first resource.

For example, the terminal device may use one bit to represent the third indication information. For example, a value of the one bit is set to 0, to indicate that the decoding mode of the second indication information is a bitmap-based decoding mode, and a value of the one bit is set to 1, to indicate that the decoding mode of the second indication information is a non-bitmap-based decoding mode. Alternatively, a value of the one bit is set to 1, to indicate that the decoding mode of the second indication information is a bitmap-based decoding mode, and a value of the one bit is set to 0, to indicate that the decoding mode of the second indication information is a non-bitmap-based decoding mode.

In another example, the terminal device may alternatively use a plurality of bits to represent the third indication information.

For example, the terminal device may use four bits to represent the third indication information, and values of the four bits are sequentially set to 0000, 0001, 0010, ..., 0110, and 0111, to sequentially indicate decoding modes that are based on the first possible design to the eleventh possible design.

Optionally, the decoding mode indicated by the third indication information may be customized by the terminal device, may be predefined, or may be pre-specified. This is not limited.

Optionally, the decoding mode indicated by the third indication information may alternatively be indicated by the access network device by using fourth indication information.

Before the terminal device sends the second indication information to the access network device, the access network device may send the fourth indication information to the terminal device, and the fourth indication information may indicate an expected decoding mode of the second indication information.

The access network device may notify the terminal device of the expected decoding mode of the second indication information based on historical service data, a requirement on a bit quantity, a requirement on complexity of decoding a field, or a requirement on resource configuration flexibility.

Based on the third indication information and the fourth indication information, and based on different bit quantity requirements or other requirements such as a complexity requirement and a resource configuration flexibility requirement, the terminal device may select appropriate second indication information indicating a resource group (or a resource) not used by the terminal device, so that indication is more flexible.

Optionally, the terminal device may further send fifth indication information to the access network device.

The fifth indication information may indicate one or more CG periods associated with the second indication information.

Optionally, the terminal device may include the fifth indication information in the UCI, and sends the UCI to the access network device.

The fifth indication information may indicate that a range of a CG period to which the second indication information sent by the terminal device to the access network device is applicable is one current CG period. In some special cases, an application scope of the second indication information may alternatively be extended to a plurality of CG periods.

For example, the fifth indication information may include an index of the one or more CG periods. For example, the fifth indication information may indicate that the second indication information is applicable only to a current CG period, and in a next CG period, the second indication information sent previously no longer takes effect. For example, assuming that the terminal device indicates, by using the fifth indication information, that an index of a CG period is 12, it indicates that the second indication information sent by the terminal device to the access network device is applicable only to the CG period whose index is 12, and is not applicable to another CG period.

For another example, when a service size remains unchanged for a long time, for example, in a plurality of CG periods, the service size remains fixed, the second indication information may be sent once, to reduce signaling overheads. In other words, indexes of a plurality of CG periods may be carried in the fifth indication information, to indicate that the second indication information is applicable to the plurality of CG periods. Sizes of services in the CG periods are fixed or differ slightly, or resources needed for transmission of services in the CG periods are the same. For example, assuming that the terminal device indicates, by using the fifth indication information, that indexes of CG periods are 12 and 13, it indicates that the second indication information sent by the terminal device to the access network device is applicable to the CG periods whose indexes are 12 and 13.

In another example, the fifth indication information may include a start position and a length of the one or more CG periods.

Different from a case in which the index of the one or more CG periods is carried in the fifth indication information, the start position and the length of the one or more CG periods may alternatively be carried in the fifth indication information, to indicate the one or more CG periods to which the second indication information is applicable.

For example, assuming that the terminal device indicates, by using the fifth indication information, that a start position of a CG period is 12 and a length of the CG period is 3, it may indicate that the second indication information sent by the terminal device to the access network device is applicable to CG periods whose indexes are 12, 13, and 14.

Based on the fifth indication information, the range of the CG period to which the second indication information is applicable may be made clear. When a service size remains unchanged for a long time, the second indication information may be sent once, and a plurality of CG periods to which the second indication information is applicable may be indicated by the fifth indication information, so that signaling overheads can be reduced.

It should be noted that the methods provided in embodiments of this application may be implemented separately, or may be implemented in combination. This is not limited.

It may be understood that, in embodiments of this application, an execution body may perform some or all of the steps in embodiments of this application. The steps or operations are merely examples. In embodiments of this application, other operations or variations of various operations may be further performed. In addition, the steps may be performed in different sequences presented in embodiments of this application, and not all the operations in embodiments of this application may need to be performed.

The solutions provided in embodiments of this application are mainly described above from a perspective of interaction between the devices. It may be understood that, to implement the foregoing functions, each device includes a corresponding hardware structure and/or a corresponding software module for performing each function. A person of ordinary skill in the art should easily be aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

When each functional module is obtained through division based on each corresponding function, FIG. 15 shows a communication apparatus 150. The communication apparatus 150 may perform actions performed by the terminal device in FIG. 10 to FIG. 14, or perform actions performed by the access network device in FIG. 10 to FIG. 14.

The communication apparatus 150 may include a transceiver module 1501 and a processing module 1502. For example, the communication apparatus 150 may be a communication device, or may be a chip used in the communication device, or another combined device or part that has a function of the foregoing communication apparatus. When the communication apparatus 150 is the communication device, the transceiver module 1501 may be a transceiver, where the transceiver may include an antenna, a radio frequency circuit, and the like; and the processing module 1502 may be a processor (or a processing circuit), for example, a baseband processor, where the baseband processor may include one or more CPUs. When the communication apparatus 150 is the part that has the function of the communication apparatus, the transceiver module 1501 may be a radio frequency unit; and the processing module 1502 may be a processor (or a processing circuit), for example, a baseband processor. When the communication apparatus 150 is a chip system, the transceiver module 1501 may be an input/output interface of a chip (for example, a baseband chip); and the processing module 1502 may be a processor (or a processing circuit) of the chip system, and may include one or more central processing units. It should be understood that the transceiver module 1501 in this embodiment of this application may be implemented by a transceiver or a transceiver-related circuit component, and the processing module 1502 may be implemented by a processor or a processor-related circuit component (or referred to as a processing circuit).

For example, the transceiver module 1501 may be configured to perform all receiving and sending operations performed by the communication apparatus in the embodiments shown in FIG. 10 to FIG. 14, and/or configured to support another process of the technology described in this specification; and the processing module 1502 may be configured to perform all operations other than the receiving and sending operations performed by the communication apparatus in the embodiments shown in FIG. 10 to FIG. 14, and/or configured to support another process of the technology described in this specification.

In another implementation, the transceiver module 1501 in FIG. 15 may be replaced with a transceiver, where a function of the transceiver module 1501 may be integrated into the transceiver; and the processing module 1502 may be replaced with a processor, where a function of the processing module 1502 may be integrated into the processor. Further, the communication apparatus 150 shown in FIG. 15 may further include a memory.

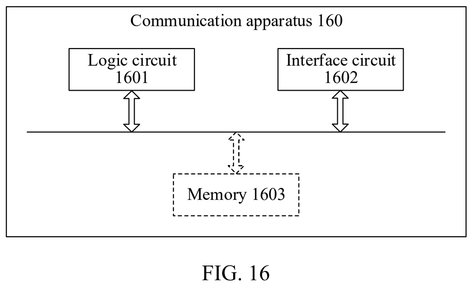

Alternatively, when the processing module 1502 is replaced with the processor, and the transceiver module 1501 is replaced with the transceiver, the communication apparatus 150 in this embodiment of this application may be a communication apparatus 160 shown in FIG. 16. The processor may be a logic circuit 1601, and the transceiver may be an interface circuit 1602. Further, the communication apparatus 160 shown in FIG. 16 may further include a memory 1603.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

Embodiments of this application further provide a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk drive or memory of the terminal. The computer-readable storage medium may alternatively be an external storage device of the foregoing terminal, for example, a plug-in hard disk drive, a smart media card (smart media card, SMC), a secure digital (secure digital, SD) card, or a flash card (flash card) that is configured on the terminal. Further, the computer-readable storage medium may further include both an internal storage unit and an external storage device of the foregoing terminal. The computer-readable storage medium is configured to store the computer program and other programs and data needed by the foregoing terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. "First" and "second" are merely intended for description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item) "means one or more. "A plurality of" refers to two or more than two. "At least two (items)" means two, three, or more. "And/or" describes an association relationship between associated objects, and indicates that three relationships may exist. For example, "A and/or B" may represent three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one of a, b, or c, or at least one of a, b, and c may represent: a, b, c, "a and b", "a and c", "b and c", or "a, b, and c", where a, b, and c may be singular, or may be plural. Both "when" and "if" mean that corresponding processing is performed in an objective case, but are not intended to limit time. In addition, the terms do not necessarily mean that a determining action is required during implementation, and do not mean any other limitation either.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The foregoing descriptions about implementations allow a person skilled in the art to clearly understand that, for the purpose of convenient and brief description, division of the foregoing functional modules is taken as an example for illustration. During actual application, the foregoing functions may be allocated to different functional modules for implementation based on a need. That is, an inner structure of an apparatus is divided into different functional modules, to implement all or some of the functions described above.

In the several embodiments provided in this application, it should be understood that the disclosed apparatuses and methods may be implemented in other manners. For example, the described apparatus embodiments are merely examples. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or the units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual need, to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk drive, a ROM, a RAM, a magnetic disk, or an optical disc.

## Claims

1. A communication method, comprising:
receiving first indication information from an access network device, wherein the first indication information indicates a transmission resource configured by the access network device for a terminal device, and the transmission resource comprises a plurality of resources; and
sending second indication information to the access network device, wherein the second indication information indicates a first resource group, the first resource group comprises one or more resource groups not used by the terminal device, each resource group comprises a plurality of resources, and the first resource group is a part or all of the transmission resource.

2. The method according to claim 1, wherein
the second indication information indicates a bitmap, and each bit in the bitmap indicates whether a resource group associated with the bit is used.

3. The method according to claim 1, wherein
the second indication information comprises length information of the first resource group, and the length information is used to determine the first resource group based on a preset end position or a preset start position of the first resource group; or
the second indication information comprises start position information of the first resource group, and the start position information is used to determine the first resource group based on a preset end position of the first resource group; or
the second indication information comprises end position information of the first resource group, and the end position information is used to determine the first resource group based on a preset start position of the first resource group.

4. The method according to claim 1, wherein
the second indication information comprises length information of a second resource group, and the length information is used to determine the second resource group based on a preset end position or a preset start position of the second resource group; or
the second indication information comprises start position information of a second resource group, and the start position information is used to determine the second resource group based on preset end position information of the second resource group; or
the second indication information comprises end position information of a second resource group, and the end position information is used to determine the second resource group based on a preset start position of the second resource group, wherein
the second resource group is one or more resource groups occupiable by the terminal device, and the second resource group is a resource that is in the transmission resource and that is other than the first resource group.

5. The method according to any one of claims 1 to 4, wherein
the resource groups comprised in the first resource group are consecutive resource groups; or
the resource groups comprised in the first resource group are discrete resource groups.

6. The method according to any one of claims 1 to 5, wherein
the resource is a frequency domain resource associated with a CG physical uplink shared channel transmission occasion CG PUSCH transmission occasion comprised in one configured grant CG period; or
the resource is a time domain resource associated with a CG PUSCH transmission occasion comprised in one CG period.

7. The method according to claim 6, wherein
the resource is one resource element RE or one resource block RB in a frequency domain resource associated with a CG PUSCH transmission occasion comprised in one CG period; or
the resource is one slot, one mini-slot, or one transport block TB in a time domain resource associated with a CG PUSCH transmission occasion comprised in one CG period.

8. The method according to any one of claims 1 to 7, wherein
a maximum quantity of physical uplink shared channel transmission occasions PUSCH transmission occasions comprised in one configured grant CG period is greater than 40.

9. The method according to claim 8, wherein
a quantity of PUSCH transmission occasions comprised in one CG period is 80.

10. The method according to any one of claims 1 to 9, wherein the method further comprises:
sending third indication information to the access network device, wherein the third indication information indicates a decoding mode of the second indication information.

11. The method according to any one of claims 1 to 10, wherein before sending the second indication information to the access network device, the method further comprises:
receiving fourth indication information from the access network device, wherein the fourth indication information indicates an expected decoding mode of the second indication information; and
determining the second indication information based on the fourth indication information.

12. The method according to any one of claims 1 to 11, wherein the method further comprises:
sending fifth indication information to the access network device, wherein the fifth indication information indicates one or more configured grant CG periods associated with the second indication information.

13. The method according to claim 12, wherein
the fifth indication information comprises an index of the one or more CG periods; or
the fifth indication information comprises a start position and a length of the one or more CG periods.

14. A communication method, comprising:
sending first indication information to a terminal device, wherein the first indication information indicates a transmission resource configured by an access network device for the terminal device, and the transmission resource comprises a plurality of resources; and
receiving second indication information from the terminal device, wherein the second indication information indicates a first resource group, the first resource group comprises one or more resource groups not used by the terminal device, the resource group comprises a plurality of resources, and the first resource group is a part or all of the transmission resource.

15. The method according to claim 14, wherein
the second indication information indicates a bitmap, and each bit in the bitmap indicates whether a resource group associated with the bit is used.

16. The method according to claim 14, wherein
the second indication information comprises length information of the first resource group, and the length information is used to determine the first resource group based on a preset end position or a preset start position of the first resource group; or
the second indication information comprises start position information of the first resource group, and the start position information is used to determine the first resource group based on a preset end position of the first resource group; or
the second indication information comprises end position information of the first resource group, and the end position information is used to determine the first resource group based on a preset start position of the first resource group.

17. The method according to claim 14, wherein
the second indication information comprises length information of a second resource group, and the length information is used to determine the second resource group based on a preset end position or a preset start position of the second resource group; or
the second indication information comprises start position information of a second resource group, and the start position information is used to determine the second resource group based on preset end position information of the second resource group; or
the second indication information comprises end position information of a second resource group, and the end position information is used to determine the second resource group based on a preset start position of the second resource group, wherein
the second resource group is one or more resource groups occupiable by the terminal device, and the second resource group is a resource that is in the transmission resource and that is other than the first resource group.

18. The method according to any one of claims 14 to 17, wherein
the resource groups comprised in the first resource group are consecutive resource groups; or
the resource groups comprised in the first resource group are discrete resource groups.

19. The method according to any one of claims 14 to 18, wherein
the resource is a frequency domain resource associated with a CG physical uplink shared channel transmission occasion CG PUSCH transmission occasion comprised in one configured grant CG period; or
the resource is a time domain resource associated with a CG PUSCH transmission occasion comprised in one CG period.

20. The method according to claim 19, wherein
the resource is one resource element RE or one resource block RB in a frequency domain resource associated with a CG PUSCH transmission occasion comprised in one CG period; or
the resource is one slot, one mini-slot, or one transport block TB in a time domain resource associated with a CG PUSCH transmission occasion comprised in one CG period.

21. The method according to any one of claims 14 to 20, wherein
a maximum quantity of physical uplink shared channel transmission occasions PUSCH occasions comprised in one configured grant CG period is greater than 40.

22. The method according to claim 21, wherein
a quantity of PUSCH transmission occasions comprised in one CG period is 80.

23. The method according to any one of claims 14 to 22, wherein the method further comprises:
receiving third indication information from the terminal device, wherein the third indication information indicates a decoding mode of the second indication information.

24. The method according to any one of claims 14 to 23, wherein before receiving the second indication information from the terminal device, the method further comprises:
sending fourth indication information to the terminal device, wherein the fourth indication information indicates an expected decoding mode of the second indication information.

25. The method according to any one of claims 14 to 24, wherein the method further comprises:
receiving fifth indication information from the terminal device, wherein the fifth indication information indicates one or more configured grant CG periods associated with the second indication information.

26. The method according to claim 25, wherein
the fifth indication information comprises an index of the one or more CG periods; or
the fifth indication information comprises a start position and a length of the one or more CG periods.

27. A communication method, comprising:
receiving first indication information from an access network device, wherein the first indication information indicates a transmission resource configured by the access network device for a terminal device, and the transmission resource comprises a plurality of resources; and
sending second indication information to the access network device, wherein the second indication information indicates a bitmap, each bit in the bitmap indicates whether a resource group associated with the bit is used by the terminal device, and the resource group comprises one or more resources in the transmission resource.

28. The method according to claim 27, wherein
the resource is a frequency domain resource associated with a CG physical uplink shared channel transmission occasion CG PUSCH transmission occasion comprised in one configured grant CG period; or
the resource is a time domain resource associated with a CG PUSCH transmission occasion comprised in one CG period.

29. The method according to claim 28, wherein
the resource is one resource element RE or one resource block RB in a frequency domain resource associated with a CG PUSCH transmission occasion comprised in one CG period; or
the resource is one slot, one mini-slot, or one transport block TB in a time domain resource associated with a CG PUSCH transmission occasion comprised in one CG period.

30. The method according to any one of claims 27 to 29, wherein
a maximum quantity of physical uplink shared channel transmission occasions PUSCH transmission occasions comprised in one configured grant CG period is greater than 40.

31. The method according to claim 30, wherein
a quantity of PUSCH transmission occasions comprised in one CG period is 80.

32. The method according to any one of claims 27 to 31, wherein the method further comprises:
sending third indication information to the access network device, wherein the third indication information indicates a decoding mode of the second indication information.

33. The method according to any one of claims 27 to 32, wherein before sending the second indication information to the access network device, the method further comprises:
receiving fourth indication information from the access network device, wherein the fourth indication information indicates an expected decoding mode of the second indication information; and
determining the second indication information based on the fourth indication information.

34. The method according to any one of claims 27 to 33, wherein the method further comprises:
sending fifth indication information to the access network device, wherein the fifth indication information indicates one or more configured grant CG periods associated with the second indication information.

35. The method according to claim 34, wherein
the fifth indication information comprises an index of the one or more CG periods; or
the fifth indication information comprises a start position and a length of the one or more CG periods.

36. A communication method, comprising:
sending first indication information to a terminal device, wherein the first indication information indicates a transmission resource configured by an access network device for the terminal device, and the transmission resource comprises a plurality of resources; and
receiving second indication information from the terminal device, wherein the second indication information indicates a bitmap, each bit in the bitmap indicates whether a resource group associated with the bit is used by the terminal device, and the resource group comprises one or more resources in the transmission resource.

37. The method according to claim 36, wherein
the resource is a frequency domain resource associated with a CG physical uplink shared channel transmission occasion CG PUSCH transmission occasion comprised in one configured grant CG period; or
the resource is a time domain resource associated with a CG PUSCH transmission occasion comprised in one CG period.

38. The method according to claim 37, wherein
the resource is one resource element RE or one resource block RB in a frequency domain resource associated with a CG PUSCH transmission occasion comprised in one CG period; or
the resource is one slot, one mini-slot, or one transport block TB in a time domain resource associated with a CG PUSCH transmission occasion comprised in one CG period.

39. The method according to any one of claims 36 to 38, wherein
a maximum quantity of physical uplink shared channel transmission occasions PUSCH occasions comprised in one configured grant CG period is greater than 40.

40. The method according to claim 39, wherein
a quantity of PUSCH transmission occasions comprised in one CG period is 80.

41. The method according to any one of claims 36 to 40, wherein the method further comprises:
receiving third indication information from the terminal device, wherein the third indication information indicates a decoding mode of the second indication information.

42. The method according to any one of claims 36 to 41, wherein before sending the second indication information to the access network device, the method further comprises:
sending fourth indication information to the terminal device, wherein the fourth indication information indicates an expected decoding mode of the second indication information.

43. The method according to any one of claims 36 to 42, wherein the method further comprises:
receiving fifth indication information from the terminal device, wherein the fifth indication information indicates one or more configured grant CG periods associated with the second indication information.

44. The method according to claim 43, wherein
the fifth indication information comprises an index of the one or more CG periods; or
the fifth indication information comprises a start position and a length of the one or more CG periods.

45. A communication apparatus, wherein the communication apparatus comprises a processor, and the processor is configured to run a computer program or instructions, to enable the communication apparatus to perform the communication method according to any one of claims 1 to 13, perform the communication method according to any one of claims 14 to 26, perform the communication method according to any one of claims 27 to 35, or perform the communication method according to any one of claims 36 to 44.

46. A computer-readable storage medium, wherein the computer-readable storage medium stores computer instructions or a program, and when the computer instructions or the program is run on a computer, the communication method according to any one of claims 1 to 13 is performed, the communication method according to any one of claims 14 to 26 is performed, the communication method according to any one of claims 27 to 35 is performed, or the communication method according to any one of claims 36 to 44 is performed.

47. A computer program product, wherein the computer program product comprises computer instructions, and when a part or all of the computer instructions are run on a computer, the communication method according to any one of claims 1 to 13 is performed, the communication method according to any one of claims 14 to 26 is performed, the communication method according to any one of claims 27 to 35 is performed, or the communication method according to any one of claims 36 to 44 is performed.

48. A communication apparatus, comprising a module configured to perform the method according to any one of claims 1 to 13, claims 14 to 26, claims 27 to 35, or claims 36 to 44.
